(19) Europäisches Patentamt
European Patent Office
Office européen des brevets

(11) Veröffentlichungsnummer: **0 125 600**
**B1**

(12) # EUROPÄISCHE PATENTSCHRIFT

(45) Veröffentlichungstag der Patentschrift: **24.09.86**

(51) Int. Cl.⁴: **C 08 G 75/02**

(21) Anmeldenummer: **84105135.2**

(22) Anmeldetag: **07.05.84**

(54) **Verfahren zur Herstellung von Polyarylensulfiden.**

(30) Priorität: **17.05.83 DE 3317821**

(43) Veröffentlichungstag der Anmeldung: **21.11.84 Patentblatt 84/47**

(45) Bekanntmachung des Hinweises auf die Patenterteilung: **24.09.86 Patentblatt 86/39**

(84) Benannte Vertragsstaaten: **BE DE FR GB IT NL**

(56) Entgegenhaltungen:
**GB-A-1 078 538**
**US-A-3 725 362**

(73) Patentinhaber: **BAYER AG, Konzernverwaltung RP Patentabteilung, D-5090 Leverkusen 1 Bayerwerk (DE)**

(72) Erfinder: **Ebert, Wolfgang, Dr., Doerperhofstrasse 31, D-4150 Krefeld (DE)**
Erfinder: **Meyer, Rolf-Volker, Dr., Buchheimer Strasse 23, D-4150 Krefeld (DE)**
Erfinder: **Idel, Karsten-Josef, Dr., Scheiblerstrasse 81, D-4150 Krefeld (DE)**
Erfinder: **Dhein, Rolf, Dr., Deswatinesstrasse 30, D-4150 Krefeld 1 (DE)**

EP 0 125 600 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein neues Verfahren zur Herstellung von gegebenenfalls verzweigten Polyarylensulfiden aus gegebenenfalls substituierten Halogenbenzolen im Gemisch mit Polyhalogenaromaten und Alkalisulfiden in polaren Lösungsmitteln in Gegenwart von Disulfidverbindungen.

Polyarylensulfide sind bekannt (vgl. US-PS 3 648 941 und 2 513 188). Sie können aus den entsprechenden Halogenaromaten und Alkali- oder Erdalkalisulfiden hergestellt werden. So werden z.B. nach dem in US-PS 3 354 129 beschriebenen Verfahren monomere und polymere Sulfide durch Umsetzung mindestens einer cyclischen Verbindung, die eine Doppelbindung zwischen benachbarten Ringatomen enthält, und die wenigstens mit einem Halogenatom substituiert ist, mit einem Alkalisulfid in einem polaren Lösungsmittel hergestellt. Polyhalogenverbindungen können als Verzweiger eingesetzt werden.

Aus der DE-AS 2 453 749 ist die Verwendung von Carboxylaten als Reaktionsbeschleuniger sowie die zusätzliche Verwendung von Thioverbindungen als Schwefelspender bekannt. Aus der DE-OS 2 623 363 bzw. der US-PS 4 038 261 ist für die Herstellung von Arylensulfidpolymeren die Verwendung von Lithiumchlorid oder Lithiumcarboxylaten als Katalysator bekannt.

Nach der US-PS 4 038 259 werden Alkalicarbonate in Kombination mit Alkalicarboxylaten und gemäß US-PS 4 038 263 Lithiumhalogenide als Katalysatoren für die Polyphenylensulfidherstellung eingesetzt. Nach der DE-OS 2 623 362 bzw. US-PS 4 038 262 werden Lithiumhalogenide oder Alkalicarboxylate zusammen mit Kohlendioxid und Alkalihydroxiden als Katalysator für die Herstellung von Arylensulfidpolymeren verwendet.

Weiterhin ist z.B. aus der US-PS 4 038 260 die Verwendung von Alkalimetallsulfonaten und aus der US-PS 4 039 518 die Verwendung von Lithiumcarbonat und Lithiumborat als Katalysator bekannt.

Polyarylensulfide mit verringertem Schmelzfließverhalten können unter Verwendung von Trialkaliphosphat-Katalysatoren (DE-OS 2 930 710) oder Alkaliphosphonat-Katalysatoren (DE-PS 2 930 797) erhalten werden.

Aus der DE-OS 2 623 333 ist bekannt, zuerst das Hydratwasser des als Katalysator eingesetzten Lithiumacetats zu entfernen und in einem zweiten Schritt das Hydratwasser des Natriumsulfidhydrats.

Im allgemeinen werden die p-Polyphenylensulfide durch eine Kettenverlangerungs- und Verzweigungsreaktion einem Hartungs- oder Curingschritt unterzogen (z.B. US-PS 3 727 620, US-PS 3 524 835, US-PS 3 839 301). Ohne diesen Hartungsschritt besitzen die p-Polyphenylensulfide im allgemeinen eine sehr niedrige Schmelzviskosität, die eine thermoplastische Verarbeitung kaum zuläßt.

In der US-PS 4 116 947 bzw. DE-OS 2 817 731 wird beschrieben, daß durch eine bestimmte Menge Restwasser bewirkt wird, daß die p-Polyphenylensulfide ohne Härtungsschritt zu Fasern versponnen und extrudiert sowie formgepreßt werden können.

Dieser Stand der Technik setzt im allgemeinen die Verwendung von Alkalicarboxylaten voraus. Weiterhin sind bestimmte Mengen Wasser im Umsetzungsgemisch vorhanden. Die Mengen, in denen diese Katalysatoren verwendet werden, gehen zudem weit über übliche katalytische Mengen hinaus. Sie werden nahezu äquimolar eingesetzt. Darüber hinaus ist die Verwendung von Alkalihydroxiden in Mengen bis zu 20 Mol-% notwendig.

Es wurde nun gefunden, daß Polyarylensulfide in guten Ausbeuten ohne Zusatz von Alkalicarboxylaten erhalten werden, wenn man die Herstellung der Polyarylensulfide in Gegenwart kleiner Mengen Disulfidverbindungen durchführt.

Die so erhaltenen Polyarylensulfide zeichnen sich durch besonders hohe Schmelzpunkte, die auf erhohte Kristallitat hinweisen und hohe Reinheit aus.

Gegenstand der Erfindung ist daher ein Verfahren zur Herstellung von gegebenenfalls verzweigten, hochmolekularen Polyarylensulfiden mit verbesserter Wärmeformbeständigkeit, aus

a) Dihalogenbenzolen, von denen 0 bis 100 Mol-%, vorzugsweise 50 bis 100 Mol-% der Formel (I)

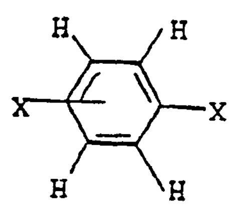

(I),

und 0 bis 100 Mol-%, vorzugsweise 0 bis 50 Mol-% der Formel (II)

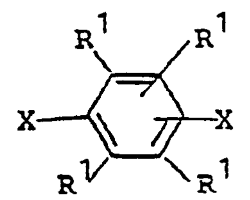

(II),

entsprechen,
in denen
X für zueinander meta- oder para-ständiges Halogen wie Fluor, Chlor oder Brom steht und
$R^1$ gleich oder verschieden ist und Wasserstoff, $C_1$-$C_{20}$-Alkyl, $C_5$-$C_{20}$-Cycloalkyl, $C_6$-$C_{24}$-Aryl, $C_7$-$C_{24}$-Alkaryl oder $C_7$-$C_{24}$-Aralkyl sein kann, wobei zwei zueinander orthoständige Reste $R^1$ zu einem aromatischen oder heterocyclischen 5 bis 10-gliedrigen Ring, der bis zu drei Heteroatome wie O, N, S enthalten kann, verknüpft sein können, und immer mindestens ein Rest $R^1$ verschieden von Wasserstoff ist und

0 bis 5,0 Mol-%, bevorzugt 0,1 bis 2,0 Mol-%, bezogen auf die Summe der Dihalogenaromaten der Formel (I) und (II), eines Tri- oder Tetrahalogenaromaten der Formel (III)

$ArHal_n$ (III),
wobei
Ar ein aromatischer oder heterocyclischer Rest, der bis zu drei Heteroatome wie N, O, S enthalten kann, mit 6-24 C-Atomen ist,
Hal für Halogen wie Fluor, Chlor, Brom und Jod steht,
n für die Zahl 3 oder 4 steht,
und

c) Alkalisulfiden, bevorzugt Natrium- oder Kaliumsulfid oder deren Mischung, gegebenenfalls in Form der Hydrate, gegebenenfalls zusammen mit Alkalihydroxiden wie Natrium- und Kaliumhydroxid, wobei das molare Verhältnis von (a+b): c im Bereich von 0,85:1 bis 1,15:1, bevorzugt 0,95:1 bis 1,05:1 liegt,

d) in einem polaren Lösungsmittel, gegebenenfalls in Anwesenheit von weiteren Cosolventien und wobei das molare Verhältnis von c) zu d) im Bereich von 1:2 bis 1:15 liegt, das dadurch gekennzeichnet ist, daß die genannten Komponenten in Gegenwart von Disulfiden der Formel (IV)

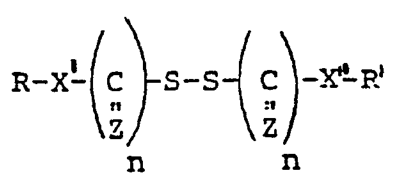

(IV),

in welcher
R und R' gleich oder verschieden sind und für $C_1$-$C_{20}$-Alkyl, $C_5$-$C_{20}$-Cycloalkyl, $C_6$-$C_{24}$-Aryl oder $C_7$-$C_{24}$-Aralkyl stehen, wobei in den Cycloalkyloder Aryl- oder Aralkylresten 1 bis 3 Ringkohlenstoffatome durch Heteroatome wie N, O ersetzt sein können,

X' und X'' gleich oder verschieden sein können und für eine einfache Bindung, O, S, oder $NR^2$, worin $R^2$ für Wasserstoff und die für R angegebene Bedeutung stehen, außerdem können R und $R^2$ auch Glieder eines gemeinsamen gegebenenfalls heterocyclischen Ringes mit 5 bis 7 Ringgliedern sein,
Z und Z' gleich oder verschieden sein können und fur O,
S, NR, worin R die oben angegebene Bedeutung hat, stehen und
n für die Zahl 0 oder 1 steht,
miteinander umgesetzt werden.

Beispiele für erfindungsgemäß einsetzbare Dihalogenbenzole der Formel I sind: p-Difluorbenzol, p-Dichlorbenzol, p-Dibrombenzol, 1-Fluor-4-chlorbenzol, 1-Fluor-4-brombenzol, 1-Chlor-4-brombenzol, m-Difluorbenzol, m-Dichlorbenzol, m-Dibrombenzol, 1-Chlor-3-brombenzol. Sie sind allein oder im Gemisch miteinander einsetzbar.

Beispiele für erfindungsgemäß einsetzbare Dihalogenbenzole der Formel II sind 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,6-dichlorbenzol, 1-Cyclohexyl-2,5-dichlor-benzol, 1-Phenyl-2,5-dichlorbenzol, 1-Benzyl-2,5-dichlorbenzol, 1-Phenyl-2,5-dibrombenzol, 1-p-Tolyl-2,5-di-chlorbenzol, 1-p-Tolyl-2,5-dibrombenzol, 1-Hexyl-2,5-dichlorbenzol, 1,4-Dichloranthrachinon. Sie sind allein oder im Gemisch miteinander einsetzbar.

Beispiele für die erfindungsgemäß einzusetzenden Polyhalogenaromaten der Formel III sind:
1,2,3-Trichlorbenzol, 1,2,4-Trichlorbenzol, 1,2,4-Tribrombenzol, 1,2,4-Trijodbenzol, 1,3,5-Trichlor-2,4,6-trimethylbenzol, 1,2,3-Trichlornaphthalin, 1,2,4-Tri-chlornaphthalin, 1,2,6-Trichlornaphthalin, 2,3,4-Trichlortoluol, 2,4,6-Trichlortoluol, 1,2,3,4-Tetrachlornaphthalin, 1,2,4,5-Tetrachlorbenzol, 2,2'-4,4'-Tetrachlorbiphenyl, 1,3,5-Trichlortriazin.

Für das erfindungsgemäße Verfahren können polare Lösungsmittel eingesetzt werden, die eine ausreichende Löslichkeit der organischen und anorganischen Reaktanten unter den Reaktionsbedingungen gewährleisten. Bevorzugt werden Lactame und Amide und besonders bevorzugt N-Alkyllactame eingesetzt.

Beispielsweise kommen als Lösungsmittel in Frage:

Dimethylformamid, Dimethylacetamid, Caprolactam, N-Methylcaprolactam, N-Ethylcaprolactam, N-Isopropylcaprolactam, N-Methyl-2-pyrrolidon, N-Ethyl-2-pyrrolidon, N-Isopropyl-2-pyrrolidon, N-Methyl-3-methyl-2-pyrrolidon, N-Methyl-5-methyl-2-pyrrolidon, N-Methyl-3,4,5-trimethyl-2-pyrrolidon, N-Methyl-2-piperidon, N-Ethyl-2-piperidon, N-Methyl-6-methyl-2-piperidon, N-Methyl-3-ethyl-2-piperidon.

Es können auch Mischungen der vorstehenden Lösungsmittel verwendet werden.

Die verwendeten Alkalisulfide können aus Schwefelwasserstoff oder den Alkalihydrogensulfiden und entsprechenden stöchiometrischen Mengen Alkalihydroxiden durch Neutralisation in oder außerhalb der Reaktionslösung hergestellt werden. Es können bei Verwendung der reinen Alkalisulfide zusätzlich Alkalihydroxide zugegeben werden, um etwa beigemengte Alkalihydrogensulfide zu neutralisieren.

Erfindungsgemäß verwendbare Verbindungen der Formel IV sind bespielsweise

a) Diacyldisulfide der Formel (V)

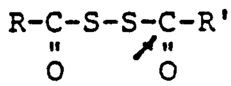 (V),

in welcher R und R' die bei Formel (IV) angegebene Bedeutung haben, z.B.

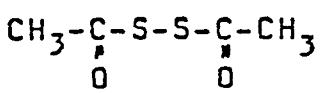 ; 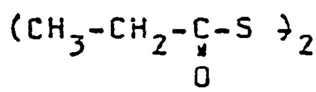 ; 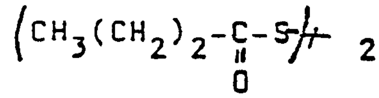

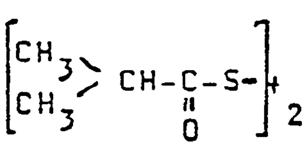 ; 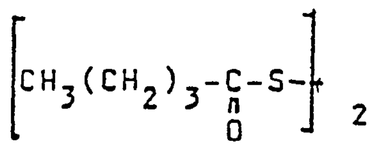 ; 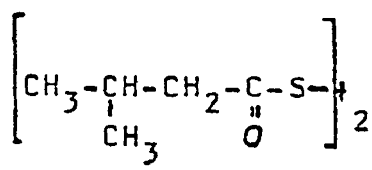

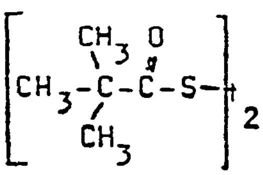 ; 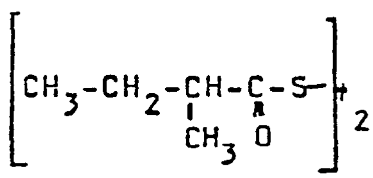 ; 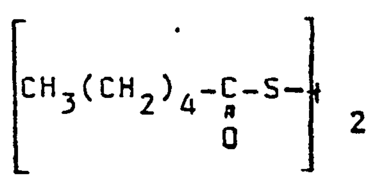 ;

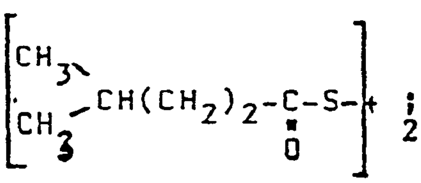 ; 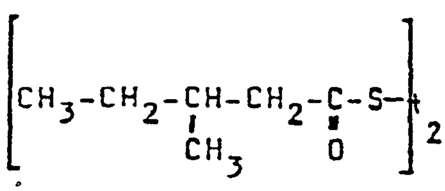 ;

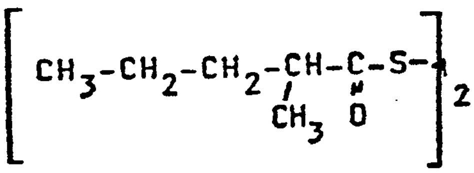 ; 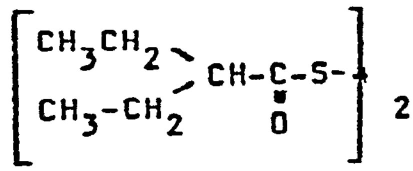 ;

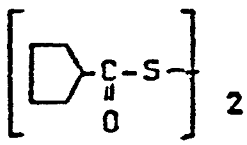 ; 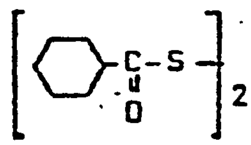 ; 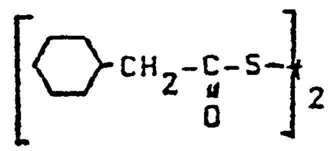

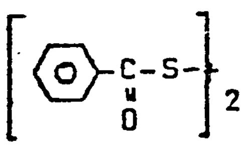 ; 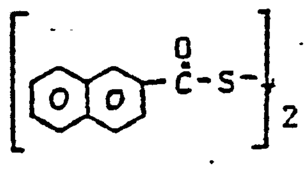 ; 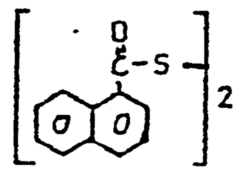 ;

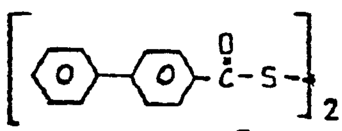 ; 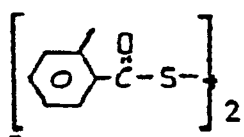 ; 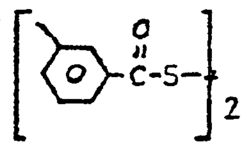 ;

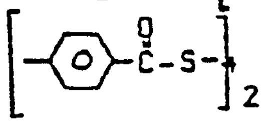

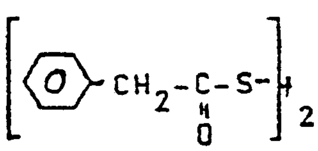 ; 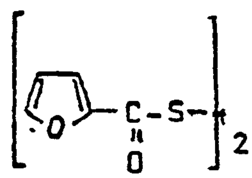

vorzugsweise verwendet werden

$$\left[CH_3-\underset{\underset{O}{\|}}{C}-S-\right]_2 , \quad \left[CH_3-CH_2-\underset{\underset{O}{\|}}{C}-S-\right]_2 ,$$

b) Dithioacyldisulfide der Formel (VI)

$$R-\underset{\underset{S}{\|}}{C}-S-S-\underset{\underset{S}{\|}}{C}-R' \qquad (VI) ,$$

in welcher R und R' die bei Formel (IV) angegebene Bedeutung haben, z.B.

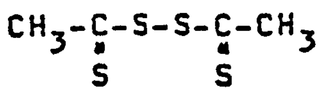 ; 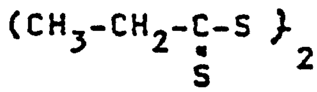 ; 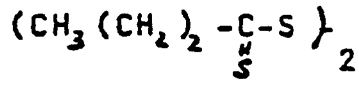 ;

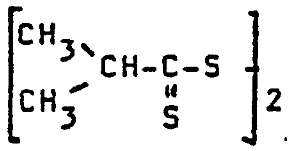 ; 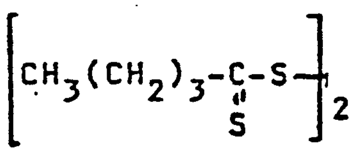 ; 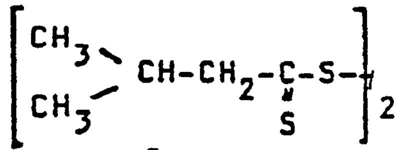 ;

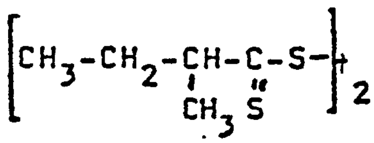 ; 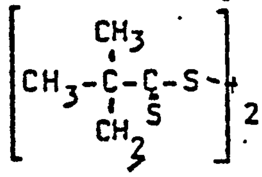 ;

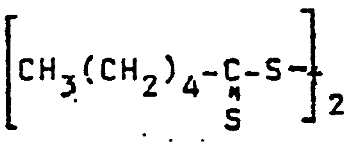 ; 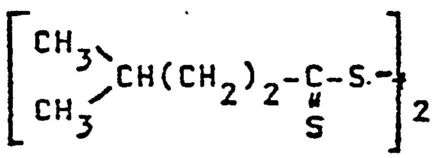 ;

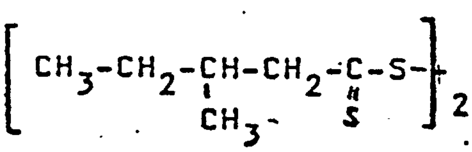 ; 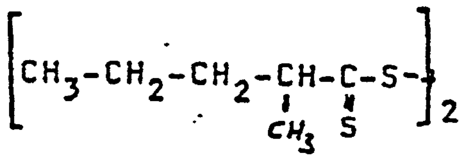 ;

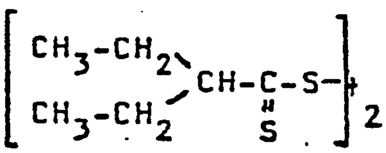 ; 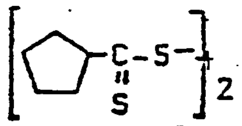 ; 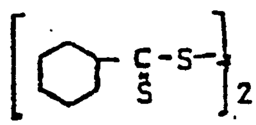 ;

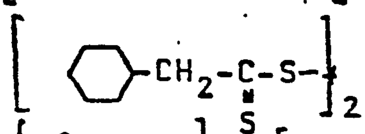 ; 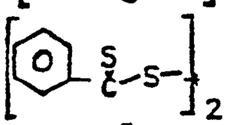 ; 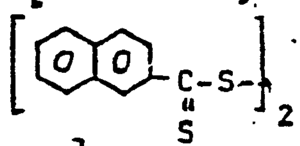 ;

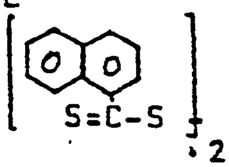 ; 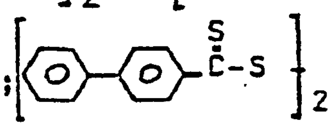 ; 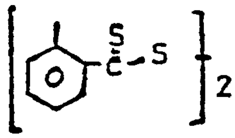 ;

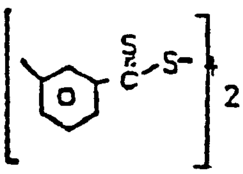 ; 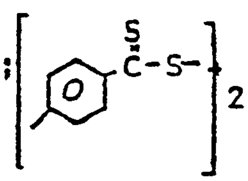 ; 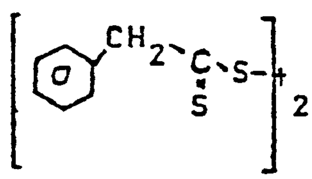 ;

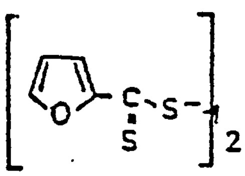

c) Xanthogendisulfide der Formel (VII)

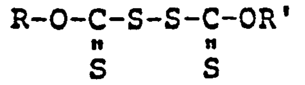 (VII),

in welcher R und R' die bei Formel (IV) angegebene Bedeutung haben, z.B. Dimethylxanthogendisulfid, Diethylxanthogendisulfid, Di-n-propylxanthogendisulfid, Diipropylxanthogendisulfid, Di-(1-methylpropyl)-xanthogen-, Di-tert.-butylxanthogen-, Dipentylxanthogen-, Di-(3-methylbutyl)-xanthogen-, Di-(2-methylbutyl)-xanthogen-, Di-(1-methylbutyl)-xanthogen-, Di-(1-ethylpropyl)xanthogendisulfid, Dicyclopropylxanthogen-, Di-(3-methylcyclopentyl)-xanthogen-, Dicyclopentylxanthogen-, Dicyclohexylxanthogendisulfid, Diphenylxanthogen-, Di-1-naphtyl-xanthogen-, Di-β-naphthylxanthogen-, Bis(diphenyl)xanthogen-, Di-(o-kresylxanthogen-, Di-(m-kresyl)xanthogen-, Di-(p-kresylxanthogen-), Dibenzylxanthogendisulfid und als heteromodifizierte Xanthogendisulfide,

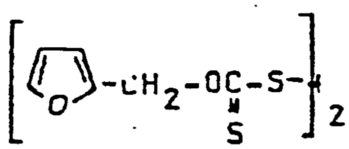 , 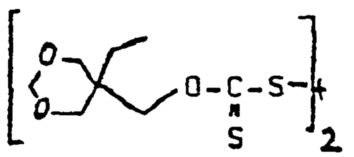 ,

vorzugsweise Dimethylxanthogenat, Diethylxanthogenat Di-i/n-propylxanthogenat, Dibenzylxanthogenat und Diphenylxanthogenat.

d) Trithiokohlensäurederivate der Formel (VIII)

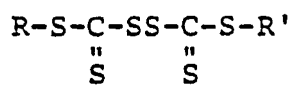 (VIII) ,

in welcher R und R' die bei Formel (IV) angegebene Bedeutung haben, z.B.

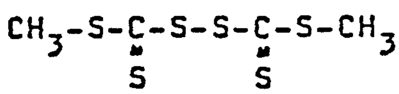 ; 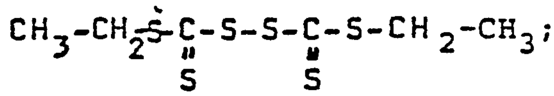

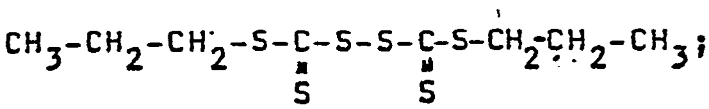 ; 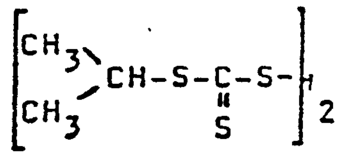

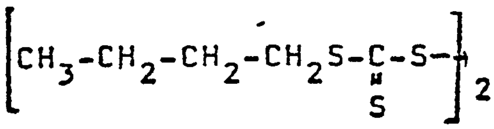 ; 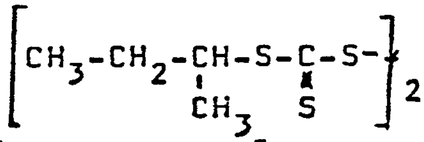

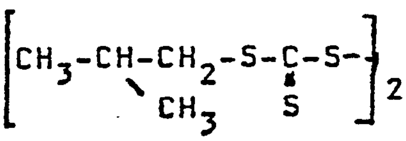 ; 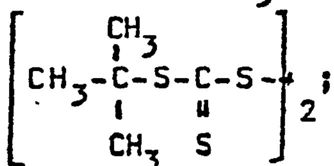 ;

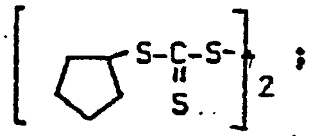 ; 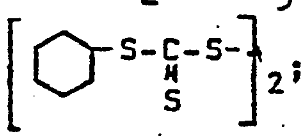 ; 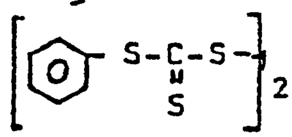 ;

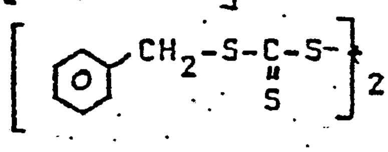 ; 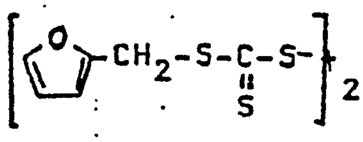

vorzugsweise verwendet werden

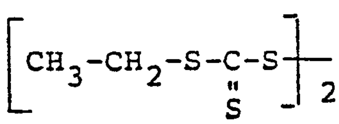 und 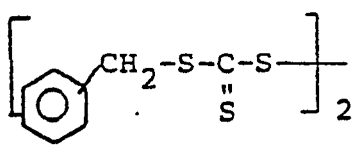

e) Thiuramdisulfide der Formel (IX)

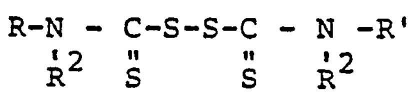 (IX),

in welcher R, R und $R^2$ die bei Formel (IV) angegebene Bedeutung haben, z.B.

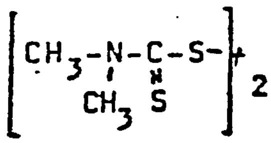 ; 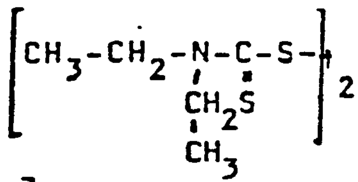 ; 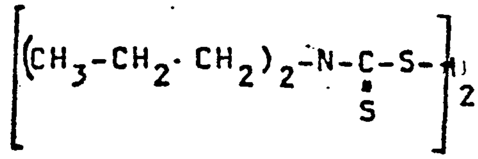 ;

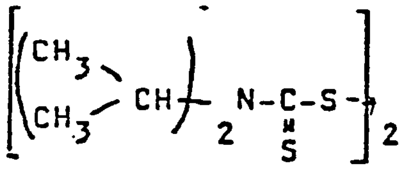 ; 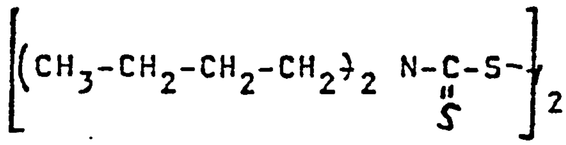 ;

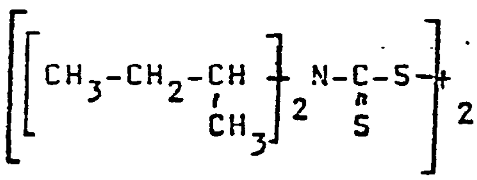 ; 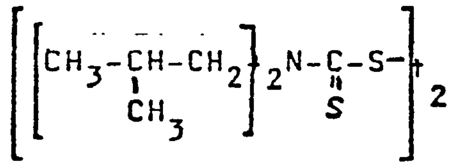 ;

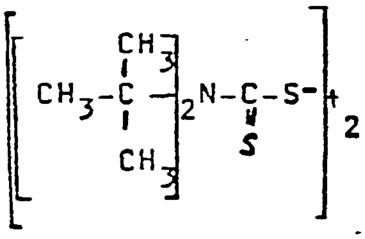 ; 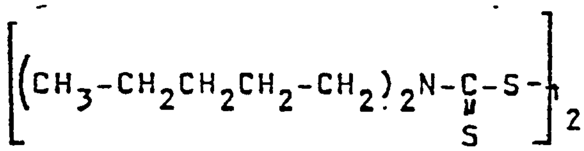 ;

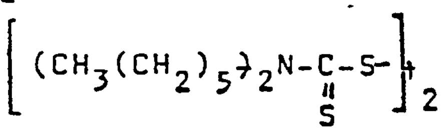 ; 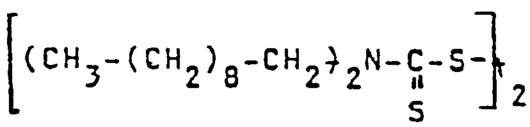 ;

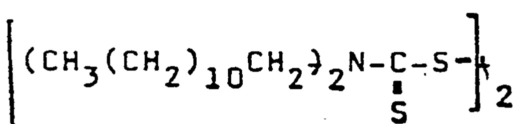 ; 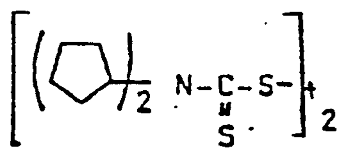 ;

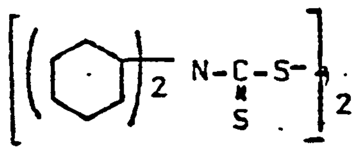 ; 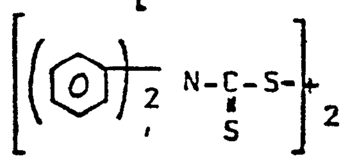 ; 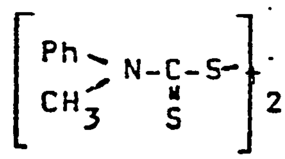 ;

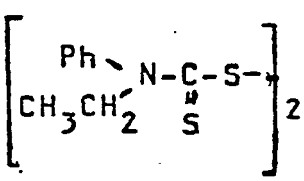 ; 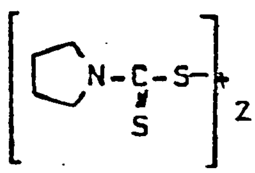 ; 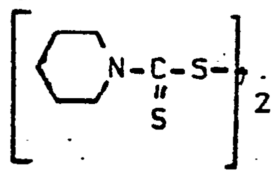 ;

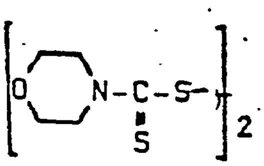 ; 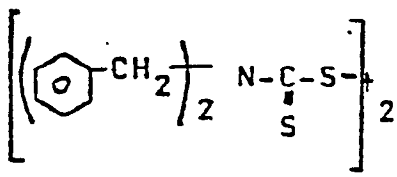 .

Vorzugsweise werden die folgenden Thiuramdisulfide verwendet:

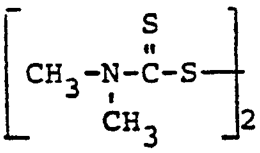 , 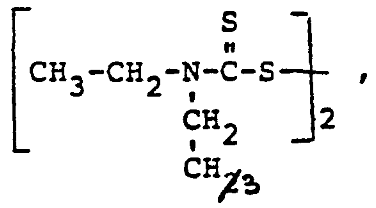 , 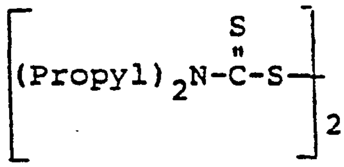

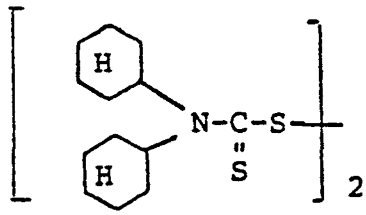 , 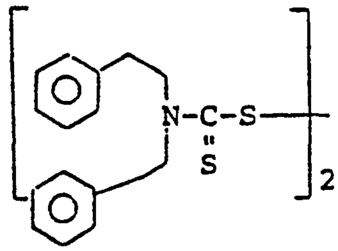 , 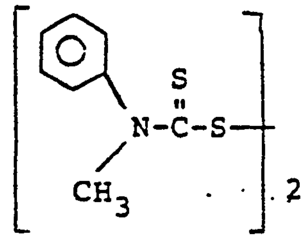

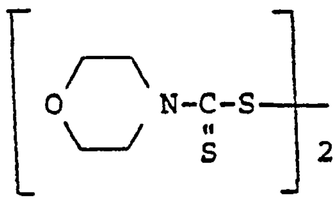

f) Disulfide (für den Fall in Formel IV n = O) der Formel (X)

R-S-S-R (X),

in welcher R die bei Formel (IV) angegebene Bedeutung hat, z.B.

Dimethyldisulfid, Diethyldisulfid, Di-n-propyldisulfid, Di-n-hexyldisulfid, Dicyclohexyldisulfid, Diphenyldisulfid, Ditolyldisulfid, 4,4'-Dichlordiphenyldisulfid, Dibenzyldisulfid, Dioctyldisulfid, Di-n-/tert.-butyldisulfid, Didodecyldisulfid, Diamyl- oder Diisoamyldisulfid.

Vorzugsweise Dimethyldisulfid, Diethyldisulfid, Dibenzyldisulfid oder Diphenyldisulfid.

Beim erfindungsgemäßen Verfahren können die Verbindungen der Formel IV allein oder Gemische aus mehreren dieser Verbindungen eingesetzt werden. Vorzugsweise werden Xanthogendisulfide, Thiuramdisulfide und Dialkyl- bzw. Diaryldisulfide verwendet.

Im allgemeinen werden 0,001 bis 0,5 Mol, vorzugsweise 0,005 Mol bis 0,15 Mol Disulfide der Formel IV pro Mol Alkalisulfid eingesetzt.

Die Umsetzungstemperatur beträgt 160 bis 295° C, vorzugsweise 190 bis 275° C.

Die Dauer der Umsetzung (Polykondensation) kann sehr unterschiedlich sein. Sie kann bis zu 30 Stunden betragen. Vorzugsweise dauert sie 0,2 bis 15 Stunden.

Das erfindungsgemäße Verfahren kann wie folgt durchgeführt werden:

Das Dihalogenbenzol oder Gemische aus Dihalogenbenzolen, gegebenenfalls im Gemisch mit einem Polyhalogenaromaten, Alkalisulfid und die Disulfide können in jeder Form im erfindungsgemäß einzusetzenden Polaren Lösungsmittel gemischt und zur Reaktion gebracht werden. Dabei kann es von Vorteil sein, wenn Wasser, das in Form von Hydratwasser der Alkalisulfide und/oder frei als Mischungskomponente von wäßrigen Lösungen der erfindungsgemäß einzusetzenden Sulfide im Gemisch sein kann, vor der Zugabe des Dihalogenbenzols und der Disulfide weitgehend entfernt wird.

So ist es vorteilhaft, daß bei Verwendung von hydratwasserhaltigen Alkalisulfiden pro Mol Alkalisulfid < 1,0 Mol Wasser, bevorzugt < 0,5 Mol Wasser im Umsetzungsgemisch vorhanden sind. Eine Möglichkeit, diesen Wassergehalt zu erreichen, besteht z.B. darin, die Ausgangsverbindungen vorzutrocknen. Dies kann z.B. erreicht werden, indem die Alkalisulfide im Reaktionsgemisch durch azeotrope Destillation (z.B. mit Toluol, Xylol) vor der Reaktion entwassert werden. Vorzugsweise werden entwässerte Alkalisulfide verwendet, wodurch eine wesentliche Vereinfachung des Verfahrens erreicht wird.

Liegt die Reaktionstemperatur der erfindungsgemüßen Polykondensation höher als der Siedepunkt des Lösungsmittels, so kann unter Druck umgesetzt werden. Eine stufenweise Steigerung der Reaktionstemperatur während der Dauer der Umsetzung kann vorteilhaft sein.

Dihalogenbenzol und Alkalisulfid werden etwa äquimolar umgesetzt. Das Molverhältnis Dihalogenbenzol/Alkalisulfid liegt im Bereich 0,85:1 bis 1,15:1, bevorzugt im Bereich von 0,95:1 bis 1,05:1.

Die erfindungsgemäß einzusetzenden Polyhalogenaromaten der Formel III können bis zu einer Menge von mehreren Mol-%, bezogen auf den Anteil Dihalogenbenzol zugesetzt werden. In der Regel wird ein Anteil von bis zu 5,0 Mol-%, vorzugsweise 0,1 bis 2,0 Mol-%, bezogen auf den Anteil Dihalogenbenzol, ausreichend sein. Bei der Verwendung von Polyhalogenaromaten werden verzweigte Polyarylensulfide erhalten.

Die Menge Lösungsmittel kann in einem weiten Bereich gewahlt werden, liegt im allgemeinen bei 2 bis 15 Mol pro Mol Alkalisulfid.

Bei den herkömmlichen Verfahren ist es notwendig, dem Natriumsulfid eine größere Menge Alkalihydroxid zur Neutralisation noch vorhandener Mengen Alkalihydrogensulfid zuzumischen. Im erfindungsgemäßen Verfahren kann darauf verzichtet werden.

Die Aufarbeitung des Reaktionsgemisches kann in mannigfaltiger Weise erfolgen.

Das Polyarylensulfid kann direkt aus der Reaktionslösung oder erst nach Zugabe, z.B. von Wasser und/oder verdünnten Sauren nach üblichen Verfahrensweisen abgetrennt werden, beispielsweise durch Filtration oder Zentrifugieren. Nach der Filtration schließt sich im allgemeinen eine Wäsche mit Wasser an. Eine Wäsche oder Extraktion mit anderen Waschflussigkeiten, die auch zusätzlich oder nachträglich zur Wasserwäsche durchgeführt werden kann, ist auch möglich.

Das Polymere kann auch durch Abziehen des Lösungsmittels aus dem Reaktionsraum und eine anschließende Wäsche, wie oben beschrieben, gewonnen werden.

Führt man das erfindungsgemäße Verfahren bei Normaldruck durch, werden die Polyarylensulfide in Ausbeuten von etwa 90 % erhalten. Diese Ausbeuten können bei den bekannten Verfahren nur mit Hilfe technisch aufwendiger Druckreaktionen erhalten werden.

Werden nach dem erfindungsgemäßen Verfahren Polyarylensulfide hergestellt, so sind im Vergleich zu den bekannten Verfahren wesentlich geringere Mengen Katalysator notwendig. Während bei den bekannten Verfahren Carboxylate in etwa äquimolaren Mengen (bez. auf Alkalisulfid) verwendet werden, genügen beim erfindungsgemäßen Verfahren wenige Mol-%.

Günstiger als in den bisherigen Verfahren ist weiterhin, daß die Volumenausbeute der Reaktion besser ist. So wird, bezogen auf Natriumsulfid, normalerweise in etwa 20 %iger Lösung in N-Methylpyrrolidon gearbeitet. Mit dem erfindungsgemäßen Verfahren kann in etwa 30 %iger Lösung gearbeitet werden.

Die nach dem erfindungsgemäßen Verfahren hergestellten Polyarylensulfide sind von hoher Reinheit. Das zeigt sich in den sehr hohen Schmelzpunkten (bis 320° C). Derartige Polyarylensulfide zeichnen sich durch erhöhte Wärmeformbestandigkeit aus und sind somit für viele technische Einsatzgebiete, insbesondere auf dem Gebiet der Elektrik, Elektronik und bei Anwendungen im Motorraum von Kraftfahrzeugen von besonderem Interesse.

## Beispiele

### Vergleichsversuch 1

13,7 g (187 mMol) Lithiumacetat x 0,4 Mol $H_2O$ und 49,1 g (373 mMol) Natriumsulfid ($Na_2S$ x 3 $H_2O$) werden in 150 ml N-Methylpyrrolidon vorgelegt und mit 0,06 Mol NaOH in 19 ml $H_2O$ versetzt. Man rührt 30 Min. bei Raumtemperatur unter $N_2$, heizt auf und destilliert bei steigender Temperatur so lange ab, bis der Siedepunkt des N-Methylpyrrolidons erreicht ist (203° C). Anschließend kühlt man auf 130° C ab, gibt 56,8 g (387 mMol) p-Dichlorbenzol zu und erhitzt 12 h am Rückfluß.

Das Reaktionsgemisch wird mit Wasser aufgenommen und dann in verdünnte Salzsaure eingegossen. Der Niederschlag wird abgenutscht, in Dichlormethan aufgeschlämmt, abgesaugt und bei 90°C im Wasserstrahlvakuum getrocknet.

Als Produkt erhält man 28 g Polyphenylensulfid (69 % Ausbeute, bezogen auf Natriumsulfid).

### Vergleichsversuch 2

Fuhrt man die Reaktion analog Vergleichsversuch 1 ohne Lithiumacetat durch, so erhalt man 41,9 % Ausbeute.

### Beispiel 1

In einem mit Rückflußkühler, Thermometer, Stickstoffeinleitungsrohr und Rührer ausgerüsteten 500-ml-Rund-kolben wurden 29,96 g (373 Mol) Natriumsulfid ($Na_2S$ x 0,13 $H_2O$); 56,85 (387 Mol) p-Dichlorbenzol, 150 ml N-Methylpyrrolidon und 2,25 g (9,3 Mol) Diethylxanthogendisulfid eingewogen. Anschließend wurde mit Stickstoff gespült und bis zum Rückfluß aufgeheizt (Rückflußtemp. von 192-194° C), und 12 h am Rückfluß gerührt.

Zur Aufarbeitung wurden im Teilvakuum (bei einem Druck von < 100 mbar) 100 ml N-Methylpyrrolidon abdestilliert. Der Rest wurde mit $H_2O$/Ethanol (1:1) aufgenommen und der Niederschlag abgesaugt. Anschließend wurde der Niederschlag in HCl/$H_2O$ aufgeschlammt und erneut abgesaugt. Der Vorgang wurde dann in Dichlormethan wiederholt und abschließend der Niederschlag mit Ethanol gewaschen. Man trocknet 14 h bei 90° C im Wasserstrahlvakuum und erhält 35 g Polyphenylensulfid (Ausbeute von 86,8 %, bezogen auf Natriumsulfid).

**Beispiel 2**

In einem mit Rückflußkühler, Thermometer, Destillationsbrücke, Stickstoffeinleitungsrohr und Rührer ausgerüsteten 500-ml-Rundkolben wurden 49,24 g (373 mMol) Natriumsulfid-Schuppen ($Na_2S$ x 3 $H_2O$) mit 50 ml $H_2O$ vorgelegt. Beim Erwärmen unter $N_2$ wurde das Natriumsulfid gelöst. Anschließend wird mit Xylol azeotrop entwässert. Dabei fällt das Natriumsulfid aus der Lösung zum größten Teil feinpulvrig aus. Als Destillat erhält man 70 g Wasser (theoretischer Wert). Anschließend wurden 150 ml N-Methyl-Pyrrolidon zugegeben und der Rest Xylol durch Andestillieren des N-Methylpyrrolidons bis 203°C entfernt. Man kühlt dann auf 120-150°C ab, fügt 56,35 g (0,387 Mol) p-Dichlorbenzol zu und tropft 4,5 g (18,6 Mol) Diethylxanthogendisulfid in 30 ml NMP innerhalb 15 Minuten ein. Anschließend wird 12 h auf Rückfluß erhitzt und gerührt. Dann wird auf ca. 100°C abgekühlt.

Das Reaktionsgemisch wird mit Wasser aufgenommen und in verdunnte Salzsäure eingerührt. Der Niederschlag wird abgesaugt, mit Wasser gewaschen und anschließend in Methylenchlorid aufgeschlämmt. Das abgesaugte Produkt wurde mit Ethanol gewaschen und anschließend 14 h im Vakuumtrockenschrank bei 90°C/15 mm Hg getrocknet.

Man erhält 35 g Polyphenylensulfid (86,7 % Ausbeute, bezogen auf Natriumsulfid).

**Beispiel 3**

In einen 500-ml-Rundkolben mit Rückflußkühler, Thermometer, Stickstoffeinleitungsrohr und Rührer werden 60,43 g (746 mMol) Natriumsulfid ($Na_2S$ x 0,167 $H_2O$), 200 ml N-Methylpyrrolidon, 113,7 g (774 mMol) p-Dichlorbenzol und 4,5 g (18,6 mMol) Diethylxanthogendisulfid eingefüllt und im leichtem Stickstoffstrom 12 h bei Rückfluß gerührt.

Nach Aufarbeitung wie in Beispiel 2 erhalt man 69 g Polyphenylensulfid (85,6 % Ausbeute, bezogen auf Natriumsulfid).

**Beispiel 4**

In einem 10-1-Stutzen, der mit Rührer, Thermometer, Stickstoffeinleitungsrohr und Rückflußkühler versehen ist, werden 1333 g (16,41 Mol) Natriumsulfid ($Na_2S$ x 0,178 $H_2O$), 2503 g (17 Mol) p-Dichlorbenzol, 99 g (410 mMol) Diethylxanthogendisulfid und 4,2 1 N-Methylpyrrolidon eingefüllt. Es wurde mit $N_2$ gespült und anschließend im leichten Stickstoffstrom 12 h bei Rückfluß gerührt. Nach Aufarbeitung wie in Beispiel 2 erhält man 1445 g PPS (Ausbeute 81,5 %, bezogen auf Natriumsulfid).

**Beispiel 5**

In einem 500-ml-Rundkolben, der mit Rührer, Thermometer, Stickstoffeinlaß und Rückflußkühler bestückt ist, werden 373 mMol Natriumsulfid ($Na_2S$ x 0,166 $H_2O$), 150 ml N-Methylpyrrolidon, 56,85 g (387 mMol) p-Dichlorbenzol, 2,25 g (9,3 mMol) Diethylxanthogendisulfid vorgelegt. Man spült mit Stickstoff und erhitzt 8 h zum Rückfluß. Nach Aufarbeitung wie in Beispiel 2 werden 34 g Polyphenylensulfid erhalten (Ausbeute von 84,4 %, bezogen auf Natriumsulfid).

**Beispiel 6**

Ansatz und Apparatur wie in Beispiel 5, jedoch wird nur 6 h am Ruckfluß gerührt. Nach der Aufarbeitung wie in Beispiel 2 erhält man 31 g Polyphenylensulfid (Ausbeute von 76,9 %, bezogen auf Natriumsulfid).

**Beispiel 7**

Ansatz und Apparatur wie in Beispiel 2, jedoch wird statt des Diethylxanthogendisulfids 4,73 g (9,3 mMol)

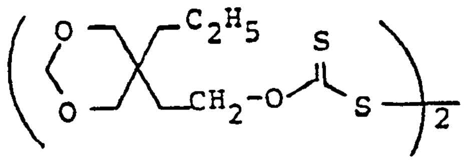

verwendet.
Nach der im Beispiel 2 beschriebenen Aufarbeitung erhält man 31 g Polyphenylensulfid (76,9 % Ausbeute, bezogen auf Natriumsulfid).

**Beispiel 8**

Führt man das Beispiel 2 mit 5,05 g (9,3 mMol) Diiso-Propylxanthogendisulfid statt des Diethylxanthogendisulfids durch, so erhält man 29 g Polyphenylensulfid (Ausbeute von 72 %).

**Beispiel 9**

Führt man das Beispiel 2 mit 6,84 g (9,3 mMol) Dibenzylxanthogendisulfid durch, so werden 29 g = 72 % Ausbeute an Polyphenylensulfid erhalten.

**Beispiel 10-17**

Analog Beispiel 5 wurden weitere Versuche durchgefuhrt, ausgehend von jeweils
29,66 g (373 mMol) $Na_2S$ x 0,085 $H_2O$ und
56,85 g (387 mMol) p-Dichlorbenzol ind
150 ml N-Methylpyrrolidon,
wobei die in der Tabelle genannten Katalysatoren die ebenfalls dort aufgeführten Ergebnisse zeitigten.

| Beispiel | Katalysator Typ | Menge g | Menge (mMol) | Ausbeute PPS g | Ausbeute PPS % | Fp. der PPS-Proben |
|---|---|---|---|---|---|---|
| 10 | 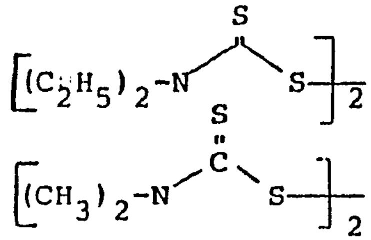 | 5,5 | 18,6 | 33 | 81,9 | |
| 11 | | 4,48 | 18,63 | 33 | 81,8 | 291-96 |
| 12 | 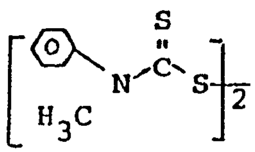 | 6,8 | 18,63 | 34 | 84,3 | 282-87 |
| 13 | 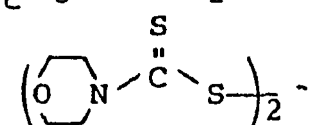 | 6,05 | 18,63 | 31 | 76,9 | 282-86 |
| 14 | 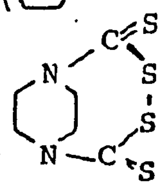 | 4,4 | 18,63 | 31 | 76,9 | 293-304 |
| 15 | $CH_3-S-S-CH_3$ | 0,88 | 9,32 | 37 | 91,7 | 270-77 |
| 16 | 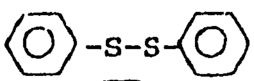 | 2,04 | 9,32 | 36,5 | 90,5 | 270-78 |
| 17 | 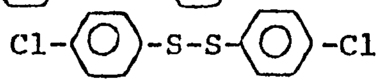 | 2,68 | 9,72 | 35,5 | 88 | 275-81 |

**Patentansprüche**

1. Verfahren zur Herstellung von gegebenenfalls verzweigten, hochmolekularen Polyarylensulfiden, aus
a) Dihalogenbenzolen, von denen 0 bis 100 Mol-% der Formel (I)

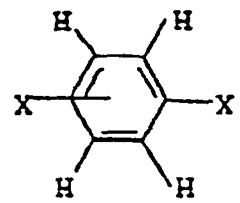

(I),

und 0 bis 100 Mol-% der Formel (II)

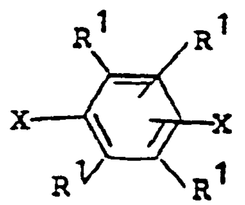

(II),

entsprechen,
in denen
X für zueinander meta- oder para-ständiges Halogen wie Fluor, Chlor oder Brom steht und
$R^1$ gleich oder verschieden ist und Wasserstoff, $C_1$-$C_{20}$-Alkyl, $C_5$-$C_{20}$-Cycloalkyl, $C_6$-$C_{24}$-Aryl, $C_7$-$C_{24}$-Alkaryl oder $C_7$-$C_{24}$-Aralkyl sein kann, wobei zwei zueinander orthoständige Reste $R^1$ zu einem aromatischen oder heterocyclischen 5 bis 10-gliedrigen Ring, der bis zu drei Heteroatome wie O, N, S enthalten kann, verknüpft sein können, und immer mindestens einen Rest $R^1$ verschieden von Wasserstoff ist und
b) 0 bis 5,0 Mol-%, bezogen auf die Summe der Dihalogenaromaten der Formel (I) und (II), eines Tri- oder Tetrahalogenaromaten der Formel (III)
$ArHal_n$ (III),
wobei
Ar ein aromtischer oder heterocyclischer Rest, der bis zu drei Heteroatome wie N, O, S enthalten kann, mit 6-24 C-Atomen ist,
Hal für Halogen wie Fluor, Chlor, Brom und Jod steht und
n für die Zahl 3 oder 4 steht
und
c) Alkalisulfiden, gegebenenfalls in Form ihrer Hydrate, gegebenenfalls zusammen mit Alkalihydroxiden, wobei das molare Verhältnis von (a+b):c im Bereich von 0,85:1 bis 1.15:1 liegt,
d) in einem polaren Lösungsmittel, gegebenenfalls in Anwesenheit von weiteren Cosolventien und wobei das molare Verhältnis von c) zu d) im Bereich von 1:2 bis 1:15 liegt,
dadurch gekennzeichnet, daß die genannten Komponenten in Gegenwart von Disulfiden der Formel (IV)

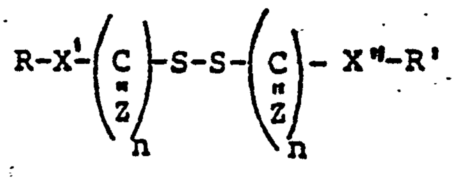

(IV),

in welcher

R und R' gleich oder verschieden sind und für $C_1$-$C_{20}$-Alkyl, $C_5$-$C_{20}$-Cycloalkyl' $C_6$ $C_{24}$ Aryl oder $C_7$-$C_{24}$-Aralkyl, wobei bei den Cycloalkyl- oder Aryl- oder Aralkylresten ein bis 3 Ringkohlenstoffatome durch Heteroatome wie N, O ersetzt sein können, steht,

X' und X'' gleich oder verschieden sind und für eine einfache Bindung, O, S oder $NR^2$, worin $R^2$ für Wasserstoff und die für R angegebene Bedeutung steht wobei außerdem R und $R^2$ auch Glieder eines gemeinsamen, gegebenballs heterocyclischen Ringes mit 5 bis 7 Ringglieder sein können,

Z gleich oder verschieden ist und für O, S, NR, worin R die oben angegebene Bedeutung hat, steht und

n für die Zahl 0 oder 1 steht,

miteinander umgesetzt werden.

2. Verfahren gemäß Anspruch 1, dadurch gekennzeichnet, daß als Verbindungen der Formel (IV) Diacyldisulfide verwendet werden.

3. Verfahren gemäß Anspruch 1, dadurch gekennzeichnet, daß als Verbindungen der Formel (IV) Dithioacyldisulfide verwendet werden.

4. Verfahren gemäß Anspruch 1, dadurch gekennzeichnet, daß als Verbindungen der Formel (IV) Xanthogendisulfide verwendet werden.

5. Verfahren gemaß Anspruch 1, dadurch gekennzeichnet, daß als Verbindungen der Formel (IV) Derivate der Trithiokohlensäure verwendet werden.

6. Verfahren gemäß Anspruch 1, dadurch gekennzeichnet, daß als Verbindungen der Formel (IV) Thiuramdisulfide verwendet werden.

7. Verfahren gemäß Anspruch 1, dadurch gekennzeichnet, daß als Verbindung der Formel (IV) Alkyl- und/oder Aryl-disulfide verwendet werden.

8. Verfahren gemaß Anspruch 1, dadurch gekennzeichnet, daß das Reaktionsgemisch <1 Mol Wasser pro Mol Alkalisulfid enthält.

**Claims**

Process for the production of optionally branched, high molecular weight polyarylene sulphides from

a) dihalogenobenzenes of which 0 to 100 mol % correspond to the formula (I)

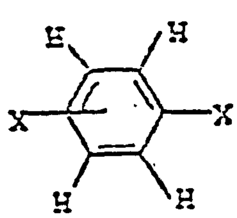

(I),

and 0 to 100 mol % to the formula (II)

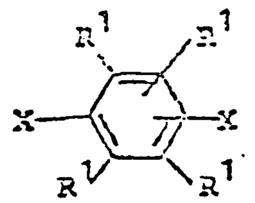

(II),

in which

X represents halogen, such as fluorine, chlorine or bromine, which are in a meta or para position to each other and

$R^1$ is identical or different and can be hydrogen, $C_1$-$C_{20}$-alkyl, $C_5$-$C_{20}$-cycloalkyl, $C_6$-$C_{24}$-aryl, $C_7$-$C_{24}$-alkaryl cr $C_7$-$C_{24}$-aralkyl, it being possible for two radicals $R^1$ which are in an ortho position to each other to be linked to form an aromatic or heterocyclic 5 to 10-membered ring which can contain up to three hetero atoms such as O, N or S, and at least one radical $R^1$ is always different from hydrogen and

b) to 5.0 mol %, based on the sum of the dihalogen aromatic comcounds of the formula (I) and (II), of a tri- or tetrahalogen aromatic compound of the formula (III)

$ArHal_n$ (III),

wherein

Ar is an aromatic or heterocyclic radical which can contain up to three hetero atoms such as N, O or S and has 6-24 C atoms,

Hal represents halogen such as fluorine, chlorine, bromine and iodine and

n represents the number 3 or 4 and

c) alkali sulphides, optionally in the form of their hydrates, optionally together with alkali hydroxides, the molar ratio of (a+b):c being in the rage 0.85:1 to 1.15:1,

d) in a polar solvent, optionally in the presence of further co-solvents, the molar ratio of c) to d) being in the range 1:2 to 1:15,

characterised in that the abovementioned components are reacted together in the presence of disulphides of the formula (IV)

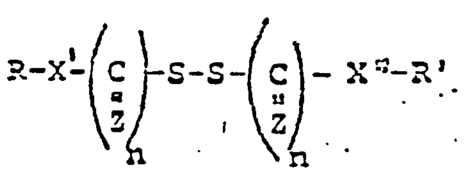

(IV),

in which

R and R′ are identical or different and represent $C_1$-$C_{20}$-alkyl, $c_5$-$C_{20}$-cycloalkyl, $C_6$-$C_{24}$-aryl or $C_7$-$C_{24}$-aralkyl, it being possible in the case of the cycloalkyl or aryl or aralkyl radicals for one to 3 ring carbon atoms to be replaced by hetero atoms such as N and O,

X′ and X″ are identical or different and represent a single bond, O, S or $NR^2$, wherein $R^2$ represents hydrogen and the meaning given for R, it furthermore being possible for R and $R^2$ also to be members of common, optionally heterocyclic ring with 5 to 7 ring members,

Z is identical or different and represents O, S or NR, wherein R has the abovementioned meaning and

n represents the number 0 or 1.

2. Process according to Claim 1, characterised in that diacyl disulphides are used as the compounds of the formula (IV).

3. Process according to Claim 1, characterised in that dithioacyl disulphides are used as the compounds of the formula (IV).

4. Process according to Claim 1, characterised in that xamthogene disulphides are used as the compounds of